# EUROPEAN PATENT APPLICATION

(11) **EP 4 610 153 A1**
(43) Date of publication of application: **03.09.2025**
(21) Application number: 25161167.9
(22) Date of filing: 28.02.2025
(51) Int. Cl.: B62J 1/08

(54) **SEAT POST**

(30) Priority: 01.03.2024 TW 113202067 U
(71) Applicant: Cheng Feng Precision Technology Co., Ltd., Taichung City 436 (TW)
(72) Inventor: LEE, Chung-Che, 436 Taichung City (TW)
(74) Representative: Lang, Christian

(57) **Abstract**

A seat post (1) is provided, wherein the seat post (1) includes: an outer tube (10, 10a) defining a center (11), and including an inner circumferential surface (12) surrounding the center (11) and a plurality of first positioning structures (13) arranged in intervals on the inner circumferential surface (12), relative to the center (11) the plurality of first positioning structures (13) defining a plurality of included angles (θ1, θ2, θ3) therebetween, the plurality of included angles (θ1, θ2, θ3) including at least two different angles; and an inner tube (20, 20a) adjustably inserted in the outer tube (10, 10a), and including an outer circumferential surface (21) and a plurality of second positioning structures (22) arranged in intervals on the outer circumferential surface (21), the plurality of second positioning structures (22) being respectively engaged with the plurality of first positioning structures (13) so that the inner tube (20, 20a) and the outer tube (10, 10a) are non-rotatable relative to each other.

## Description

### BACKGROUND OF THE INVENTION

### Field of the Invention

The present invention relates to an element of a bicycle, particularly to a seat post.

### Description of the Prior Art

A conventional bicycle frame includes a seat post inserted into a seat tube, with an upper portion of the seat post connected to a saddle for seating. Depending on different riders and/or different riding environments, the seat post can be adjusted to an appropriate height. Therefore, an adjustable seat post has been developed to enable height adjustment, improving riding comfort.

A conventional adjustable seat post includes an outer tube and an inner tube inserted therein, and the inner tube is non-rotatable relative to the outer tube to maintain the orientation of the saddle. Typically, a plurality of positioning structures are arranged at equal angular intervals between the outer tube and the inner tube to prevent relative rotation. However, such equal angular spacing of the positioning structures results in stress concentration at specific angular positions of the outer tube, leading to potential cracking, reduced durability, and weakened stability and strength of the assembled outer and inner tubes.

The present invention is, therefore, arisen to obviate or at least mitigate the above-mentioned disadvantages.

### SUMMARY OF THE INVENTION

The main object of the present invention is to provide a seat post which enhances stability and strength while effectively mitigating stress concentration at specific angular positions, thereby improving durability.

To achieve the above and other objects, a seat post is provided, wherein the seat post includes: an outer tube defining a center, and including an inner circumferential surface surrounding the center and a plurality of first positioning structures arranged in intervals on the inner circumferential surface, relative to the center the plurality of first positioning structures defining a plurality of included angles therebetween, the plurality of included angles including at least two different angles; and an inner tube adjustably inserted in the outer tube, and including an outer circumferential surface and a plurality of second positioning structures arranged in intervals on the outer circumferential surface, the plurality of second positioning structures being respectively engaged with the plurality of first positioning structures so that the inner tube and the outer tube are non-rotatable relative to each other.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective view of an exemplary embodiment of the present invention;
Fig. 2 is an exploded view of an exemplary embodiment of the present invention;
Fig. 3 is a cross-sectional view of an exemplary embodiment of the present invention;
Fig. 4 is a schematic view of an outer tube in an exemplary embodiment of the present invention;
Fig. 5 is a schematic view of the outer tube in another exemplary embodiment of the present invention; and
Figs. 6 and 7 are schematic views of an inner tube in another alternative exemplary embodiment of the present invention.

### DETAILED DESCRIPTION OF THE PREFERRED EMBODIMENTS

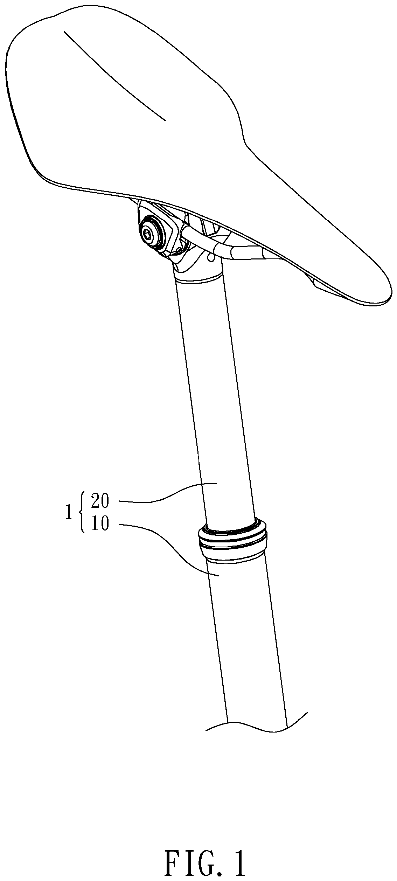

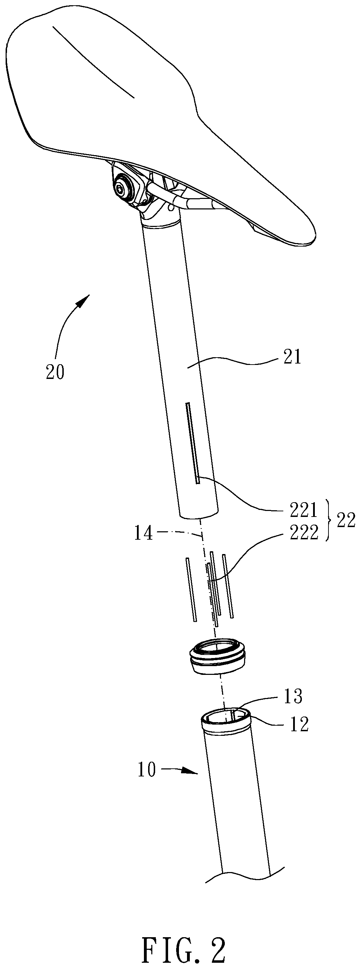

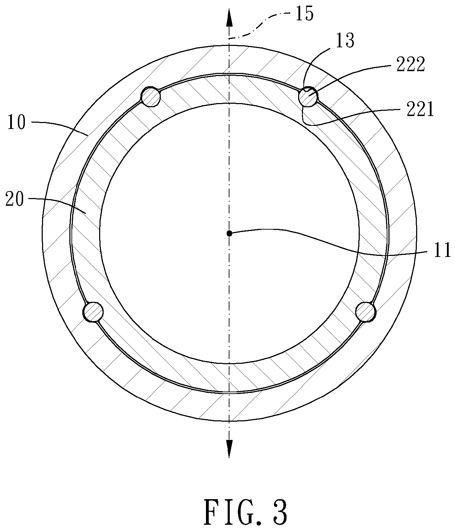

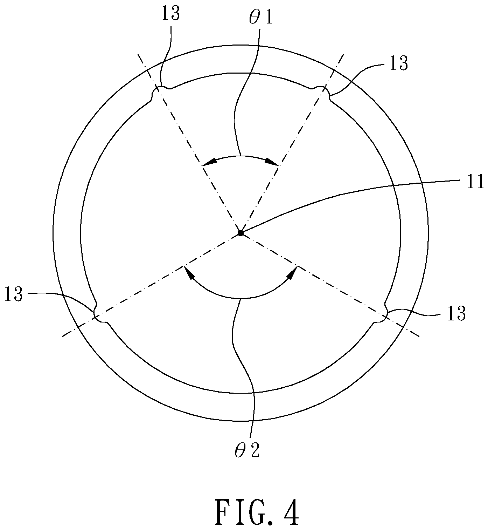

Please refer to Figs. 1 to 4 for an exemplary embodiment of the present invention. A seat post 1 of the present invention includes an outer tube 10 and an inner tube 20.

The outer tube 10 defines a center 11 and includes an inner circumferential surface 12 surrounding the center 11 and a plurality of first positioning structures 13 arranged in intervals on the inner circumferential surface 12. Relative to the center 11, the plurality of first positioning structures 13 define a plurality of included angles therebetween, and the plurality of included angles includes at least two different angles. The inner tube 20 is adjustably inserted in the outer tube 10 and includes an outer circumferential surface 21 and a plurality of second positioning structures 22 arranged in intervals on the outer circumferential surface 21. The plurality of second positioning structures 22 are respectively engaged with the plurality of first positioning structures 13 so that the inner tube 20 and the outer tube 10 are non-rotatable relative to each other. As such, the stability and strength of the assembled outer tube 10 and inner tube 20 are enhanced, stress concentration at specific angular positions of the outer tube 10 is effectively mitigated, cracking of the outer tube 10 is prevented, and durability is improved.

Preferably, the plurality of first positioning structures 13 are integrally formed with the outer tube 10. In a radial direction of the outer tube 10, each of the plurality of first positioning structures 13 has a dimension not greater than 0.50 times a wall thickness of the outer tube 10, thereby achieving greater structural strength.

Specifically, the outer tube 10 further defines an axial direction 14, and at least one of the plurality of first positioning structures 13 is parallel to the axial direction 14; however, the first positioning structures 13 may also not be parallel to the axial direction 14. In this embodiment, each of the plurality of first positioning structures 13 is a groove, each of the plurality of first positioning structures 13 is parallel to the axial direction 14, and at least one of the plurality of first positioning structures 13 is an arced groove. In this embodiment, each of the plurality of first positioning structures 13 is an arced groove, facilitating manufacturing and ensuring uniform stress distribution. Each of the plurality of second positioning structures 22 includes an engaging slot 221 and a pin 222 disposed in the engaging slot 221. The pin 222 (which may also be a detent ball or another engaging member) is further engaged in one of the grooves. This configuration allows for easy manufacturing, assembly, disassembly, maintenance, and replacement. It is noted that the pin 222 may be integrally formed with the inner tube 20 or the outer tube 10. The number of the plurality of first positioning structures 13 is an even number, the number of the plurality of second positioning structures 22 is the same as the number of the plurality of first positioning structures 13, and the plurality of first positioning structures 13 are symmetrically arranged relative to a diametric direction 15 of the outer tube 10, contributing to uniform stress distribution. The number of the plurality of first positioning structures 13 may be an odd number. An end of each groove may be open at an end surface of the outer tube 10, facilitating insertion of the inner tube 20. Both ends of the engaging slot 221 are closed ends, ensuring stable retention of the pin 222; however, an end of the engaging slot 221 may be open at an end surface of the inner tube 20.

For example, in this embodiment, the number of the plurality of first positioning structures 13 is four, each of the plurality of first positioning structures 13 is an arced groove with both ends closed, and the inner circumferential surface 12 of the outer tube 10 includes a plurality of sliding slots (first positioning structures 13) corresponding to the plurality of first positioning structures 13. The plurality of arced grooves are symmetrically arranged relative to the diametric direction 15 of the outer tube 10. Preferably, the plurality of sliding slots are arced slots, and the plurality of sliding slots are parallel to the axial direction 14. A plurality of pins 222 are respectively engaged between the plurality of arced grooves and the plurality of sliding slots. Thus, the inner tube 20 is non-rotatably inserted in the outer tube 10 and can be smoothly slid for height adjustment. A first included angle θ1 is defined between two of the arced grooves, and a second included angle θ2 is defined between another two of the arced grooves, and the second included angle θ2 is different from (greater than) the first included angle θ1.

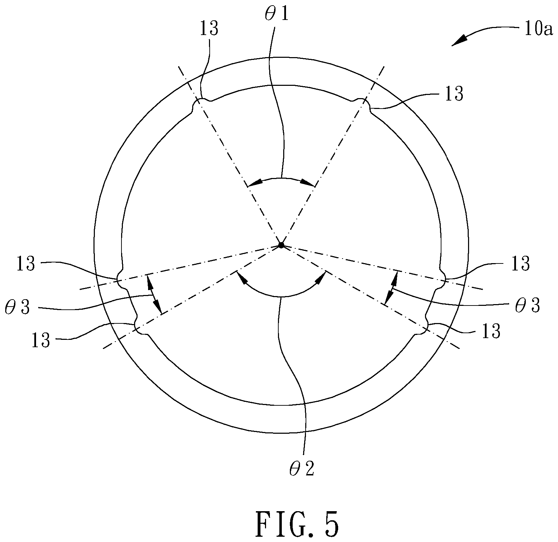

In an alternative embodiment as shown in Fig. 5, the number of the plurality of first positioning structures 13 is six, and the plurality of arced grooves are symmetrically arranged relative to the diametric direction of the outer tube 10a. A first included angle θ1 is defined between two of the first positioning structures 13, a second included angle θ2 is defined between another two of the first positioning structures 13, a third included angle θ3 is defined between another two of the first positioning structures 13, and the first included angle θ1, the second included angle θ2 and the third included angle θ3 are different from one another. It is understood that the number of the plurality of first positioning structures 13 is not limited to these examples and may be other numbers as well.

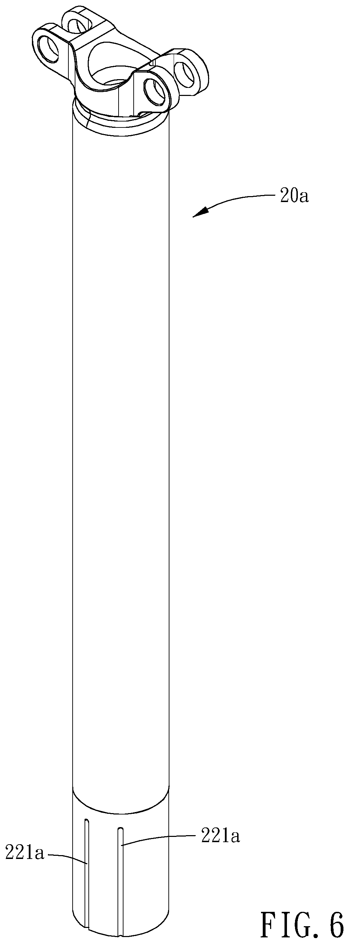

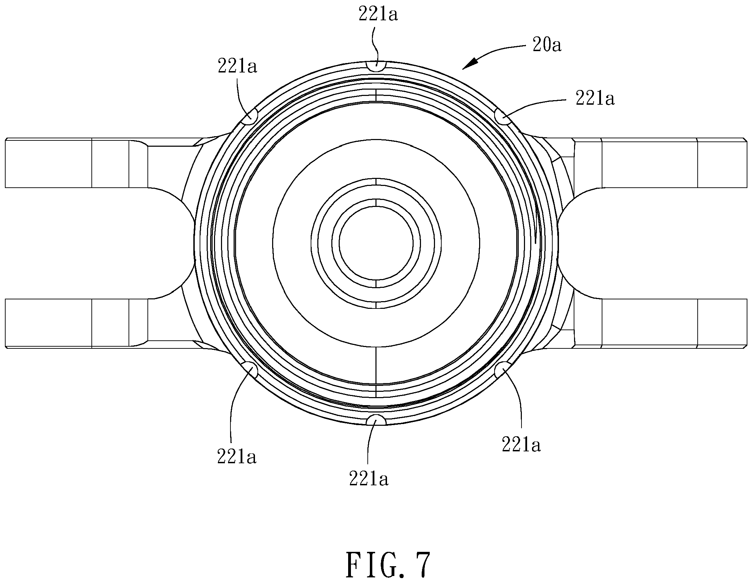

In another alternative embodiment as shown in Figs. 6 and 7, the plurality of second positioning structures 22 includes two groups of engaging slot 221a which are symmetrically arranged relative to the diametric direction of the inner tube 20a, each of the two groups of engaging slot includes three engaging slot 221a which are arranged at equal angular intervals, and the included angle between the two groups of engaging slot 221a is different from neighboring two of the three engaging slot 221a of each of the two groups of engaging slot 221a. In this embodiment, an end of each engaging slot 221a is a closed end, and another end of each engaging slot 221a is open at an end surface of the inner tube 20a.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A seat post (1) including:
an outer tube (10, 10a) defining a center (11), and including an inner circumferential surface (12) surrounding the center (11) and a plurality of first positioning structures (13) arranged in intervals on the inner circumferential surface (12), relative to the center (11) the plurality of first positioning structures (13) defining a plurality of included angles (θ1, θ2, θ3) therebetween, the plurality of included angles (θ1, θ2, θ3) including at least two different angles; and
an inner tube (20, 20a) adjustably inserted in the outer tube (10, 10a), and including an outer circumferential surface (21) and a plurality of second positioning structures (22) arranged in intervals on the outer circumferential surface (21), the plurality of second positioning structures (22) being respectively engaged with the plurality of first positioning structures (13) so that the inner tube (20, 20a) and the outer tube (10, 10a) are non-rotatable relative to each other.

2. The seat post (1) of claim 1, wherein each of the plurality of first positioning structures (13) extends longitudinally from an end of the outer tube (10, 10a) toward another end of the outer tube (10, 10a).

3. The seat post (1) of claim 2, wherein the outer tube (10, 10a) further defines an axial direction (14), and at least one of the plurality of first positioning structures (13) is parallel to the axial direction (14).

4. The seat post (1) of claim 1, wherein the number of the plurality of first positioning structures (13) is an even number.

5. The seat post (1) of claim 4, wherein the plurality of first positioning structures (13) are symmetrically arranged relative to a diametric direction (15) of the outer tube (10, 10a).

6. The seat post (1) of claim 1, wherein the number of the plurality of first positioning structures (13) is an odd number.

7. The seat post (1) of claim 3, wherein the plurality of first positioning structures (13) are integrally formed with the outer tube (10, 10a); the number of the plurality of first positioning structures (13) is an even number; the plurality of first positioning structures (13) are symmetrically arranged relative to a diametric direction (15) of the outer tube (10, 10a); in a radial direction of the outer tube (10, 10a), each of the plurality of first positioning structures (13) has a dimension not greater than 0.50 times a wall thickness of the outer tube (10, 10a); and the number of the plurality of second positioning structures (22) is the same as the number of the plurality of first positioning structures (13).

8. The seat post (1) of claim 1, wherein each of the plurality of first positioning structures (13) is a groove, each of the second positioning structures (22) includes an engaging slot (221, 221a) and a pin (222) which is disposed in the engaging slot (221, 221a) and engaged in one said groove.

9. The seat post (1) of claim 8, wherein at least one of the plurality of first positioning structures (13) is an arced groove.

10. The seat post (1) of claim 8, wherein at least one end of the engaging slot (221, 221a) is a closed end.
